Europäisches Patentamt

European Patent Office

Office européen des brevets

(11) Publication number: **0 320 143 B1**

## EUROPEAN PATENT SPECIFICATION

(45) Date of publication of patent specification: **13.05.92**  (51) Int. Cl.⁵: **B60C 11/01**

(21) Application number: **88311062.9**

(22) Date of filing: **23.11.88**

(54) Pneumatic tyre.

(30) Priority: **30.11.87 JP 304072/87**

(43) Date of publication of application:
**14.06.89 Bulletin  89/24**

(45) Publication of the grant of the patent:
**13.05.92 Bulletin  92/20**

(84) Designated Contracting States:
**DE FR GB**

(56) References cited:
**EP-A- 0 072 500**
**FR-A- 863 821**
**GB-A- 746 479**
**US-A- 4 222 424**
**US-E- 30 549**

(73) Proprietor: **SUMITOMO RUBBER INDUSTRIES, CO. LTD**
**No. 1-1, Tsutsui-cho 1-chome**
**Chuo-ku Kobe-shi Hyogo-ken 651(JP)**

(72) Inventor: **Yamaju, Hisashi**
**6-10 Kounancho 4-chome Higashi nada-ku**
**Kobe-shi Hyogo-ken(JP)**
Inventor: **Inaoka, Modori**
**1-4 Tsuto Sumiecho Nishinomiya-shi**
**Hyogo-ken(JP)**

(74) Representative: **Stewart, Charles Geoffrey**
**SP TYRES UK LIMITED Tyre Technical Division**
**Fort Dunlop Birmingham B24 9OT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a pneumatic tyre and more particularly to the shoulder regions of a pneumatic tyre.

It is well known that a tyre is subjected to repeated deformations such as alternating compressive deflection and expansion during rotation and thus heat is generated internally. Especially, in tyres for heavy duty vehicles such as trucks, buses, and so on, the increase in internal temperature is great because of the comparatively thick rubber and the resultant large heat accumulating power thereof. As a result, ply separation failure and/or rubber separation failures are apt to be induced at the belt edge regions by high stress.

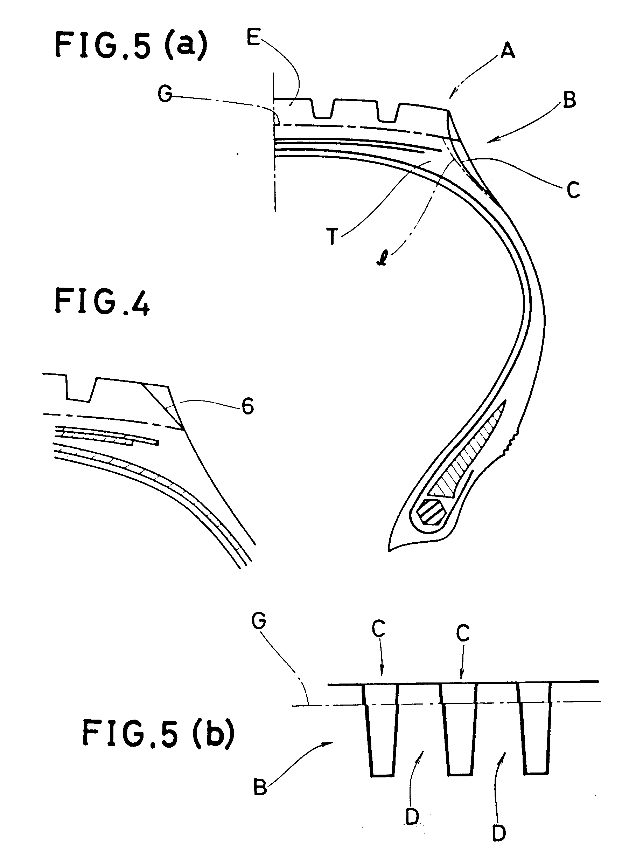

In order to solve such problems the prior art has for example, as shown in Figs.5 (a) and (b) provided tyres having shoulder grooves C extending radially inwardly from the tread edge portions A to the shoulder portion B so that the heat accumulating power of the shoulder portion B is diminished and heat radiation therefrom is promoted.

However, such tyres have drawbacks including the following:-

1. the heat distribution is uneven between the hollow groove parts C and the buttress parts D formed therebetween, which is unfavourable from the point of view of prevention of the above-mentioned separation failures: and
2. the resultant high rigidity of the buttress region D tends to cause uneven wear.

On the other hand, from the point of view of saving resources and/or cost reduction, it is often the case that a worn tyre is retreaded and reused.

In the above-mentioned prior art tyres, however, it is also hard to determine the position for the boundary G which defines the worn portion to be removed, and frequent measuring work is required therefor. Accordingly, the work of removing a worn tread E from a base tyre T (base body) in a retreading process becomes difficult and the retreading cost is therefore increased. Furthermore, in sticking a new tread onto the base tyre, it is necessary to join precisely the shoulder grooves C, but often gaps or differences are formed in the joint, which makes for a bad external appearance.

Therefore, to avoid such problems it is obvious to remove the rubber of the shoulder regions in which the shoulder grooves C are formed together with worn tread rubber as shown in Fig.5 (a) by the chain line I, but this work inevitably still further increases the amount of rubber to be removed, and lowers the working efficiency. It is, therefore, an object of the present invention to provide a pneumatic tyre, in which an excessive rise in the temperature of the rubber in the shoulder portions and uneven wear of the tread are effectively prevented to extend the tyre life, and which can facilitate the worn tread removing work in a tyre retreading process.

A pneumatic tyre having a tread region and a pair of shoulder regions extending radially inwardly one from each edge of the tread region characterised in that each shoulder region is provided with shoulder grooves and buttress hollows, said shoulder grooves being arranged circumferentially of the tyre and extending radially inwardly from the tread edges and terminating at a distance L1 radially inwardly from the outer surface of the tread region so that the radially inner ends thereof are located on a circle at the surface of each shoulder region, said buttress hollows being arranged circumferentially of the tyre so as to be positioned one between two circumferentially adjacent shoulder grooves, and the radially outermost ends of said buttress hollows being located radially inwardly of said radially innermost ends of the shoulder grooves.

Further features will become apparent from the following description of a radial tyre for heavy duty vehicles by way of example only with reference to the accompanying drawings, in which:

Fig.1 is a half sectional view of a tyre according to the invention

Fig.2 is a plan view showing the tread region of the tyre

Fig.3 is a partial side view showing the buttressed part of the shoulder region

Fig.4. is a sectional view showing another example of the shoulder groove in the present invention; and

Figs.5 (a) and (b) are a plan view and a side view respectively of a conventional tyre.

In the drawings, a pneumatic tyre 1 comprises a radial carcass 13 turned up in both edge portions around a pair of bead cores 12, a tread 15 having edges P disposed radially outside the carcass, and a belt 14 disposed between the carcass and the tread and composed of at least two plies of inextensible cords.

The tread 15 has a pair of shoulder regions 2 located adjacent to the edges P and extending radially inwardly therefrom, a pair of sidewalls situated radially inward of the shoulder regions 2 and a pair of bead regions.

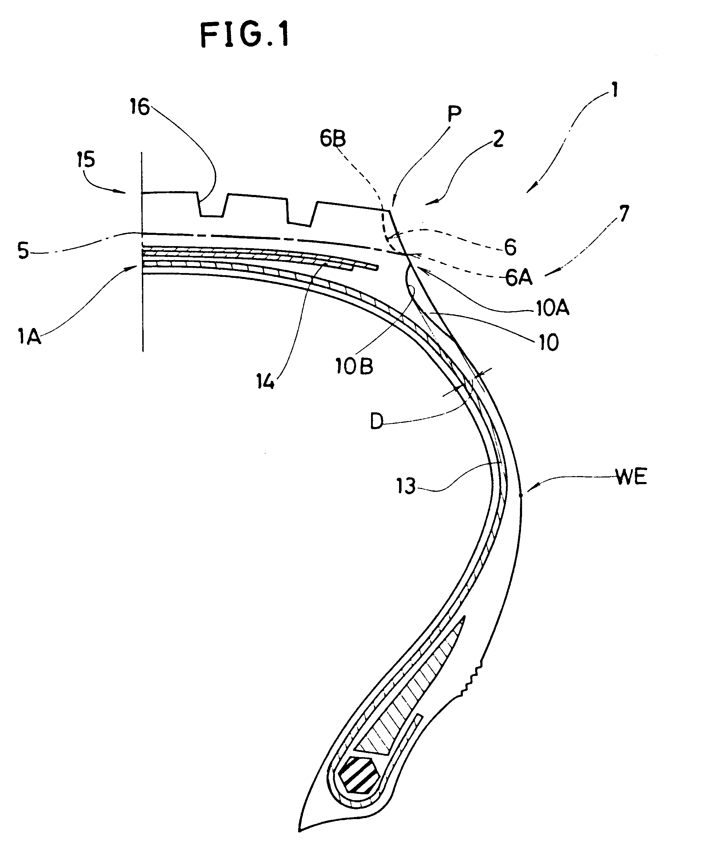

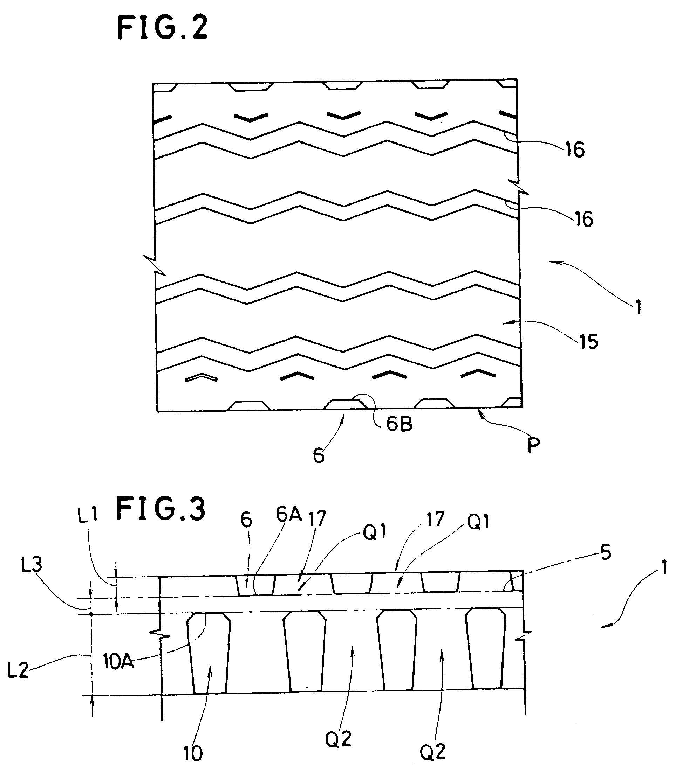

As shown particularly in Figs 1 & 3 by an imaginary line 5 between the belt layer 14 and the base of tread grooves 16, there is a boundary between the base tyre 1A and the tread 15 to be used for the main body tread part to be removed. The distance L1 between the boundary 5 and the outer surface of the tread 15 is usually 0.5 to 4 % of the overall outer diameter of the tyre when new.

The tyre 1 is provided in the shoulder region 2 with shoulder grooves 6 and buttress hollows 10, thereby defining a buttressed portion 7 on each side of the tyre. The buttressed portion 7 is situated radially outwardly of the tyre maximum width point WE.

The shoulder grooves 6 are spaced in the circumferential direction at regular intervals. However, to reduce the sound pressure level of the pattern noise, they are more preferably arranged at irregular intervals according to a variable pitching method.

The radially outer end 6B of each shoulder groove 6 opens at the outer surface of the tread, and the radially inner end is located at the above-mentioned boundary 5. That is, the shoulder grooves 6 terminate at a distance L1 which is in the range of 0.5 to 4 % of the overall diameter of the tyre when new from the outer surface of the tread 15.

The width of the shoulder groove 6 is properly set in accordance with the outer diameter of the tyre and the intervals or the pitches of the shoulder grooves 6.

The sidewalls of each shoulder groove 6 are obliquely formed as shown in Fig. 2 and the corners are rounded off to prevent crack propagation from the repeated deformations during tyre rotations. The shoulder grooves 6 may be formed in a triangular shape in cross section as shown in Fig.4.

The above mentioned buttress hollows 10 are arranged in the circumferential direction of the tyre so that each buttress hollow 10 is located substantially centrally between two adjacent shoulder grooves 6.

The radially outer end 10A of each buttress hollow 10 is positioned at a distance L3 radially inwards of the boundary 5 which is the position of the radially inner ends 6A of the grooves. The distance L3 is in the range of 0.2 to 4 % of the outer diameter of the tyre.

Thus the tyre is provided in each shoulder region 2 with a circumferentially continuously extending rib whose outer surface is devoid of any grooves or hollows.

If the distance L3 is greater than 4 % of the tyre outer diameter, the rigidity of the resultant buttressed part 17 between adjacent shoulder grooves 6 is large enough to cause partial wear or uneven wear around each buttressed part 17. Further, because the total volume of the rubber used in the thick gauge parts such as the L3 width part or rib and the buttresses Q1 and Q2 is increased, the effect of decreasing the heat generation then becomes less and the distribution of the internal temperature becomes uneven, thereby increasing the internal strain in the buttressed portion 7.

Preferably, the buttress hollows 10 are so formed that the maximum groove depth D is 5mm or so, and the length L2 exceeds 0.8% of the outer diameter of the tyre.

If the length L2 is less than 0.8% of the tyre outer diameter, the effect of forming the buttress hollows 10 becomes insufficient for diminishing the heat accumulating power of the shoulder portion 2 and promoting the heat radiation therefrom.

If the maximum groove depth D exceeds 5mm, the strength of the tyre becomes too low.

In order to diminish the difference in rigidity between the hollowed parts 10 and the buttressed parts Q2 and to alleviate strain, preferably each buttress hollow 10 is so formed that the bottom 10B thereof is smoothly curved up to the surface of its surrounding.

As described above, the pneumatic tyre according to the present invention is provided in each shoulder region with the buttressed portion 7 so constructed that the shoulder grooves 6 and the buttress hollows 10 are formed alternatively on each side of the circumferentially continuously extending rib. Accordingly, the rubber in the shoulder regions has thick parts and thin parts uniformly, that is, on the whole it has a uniform thickness. As a result, the internal heat generation of the tyre and the difference in rigidity of the rubber can be decreased more evenly in comparison with conventional tyres, which ensures an effective prevention of ply separation and rubber separation at the belt edge.

Furthermore, the buttress parts 17 between the shoulder grooves 6 are provided with less radial support because the buttress hollows 10 are disposed radially inwardly thereof. Accordingly, the rigidity of such parts does not become much higher than that of the surrounding parts, and as a result, uneven wear such as shoulder wear in which the tread edge portions wear rapidly in comparison with the tread crown portion is effectively prevented.

Then again, according to the present invention, the shoulder grooves 6 are so arranged in the circumferential direction of the tyre that their inner ends 6A are brought into a line. Accordingly, when the tread 15 has been worn out and the tyre is put to a retreading process, the inner ends 6A provide the worker with a guide line showing the above mentioned boundary 5 at which the worker must remove the worn tread rubber, which facilitates the worn tread removing work and avoids frequent measuring of the tyre dimensions. This ensures effective reduction in working hours and retreading cost together with an accurately worked tyre and a good external appearance for the retreaded tyre.

## Claims

1. A pneumatic tyre having a tread region (15) and a pair of shoulder regions (2) extending radially inwardly one from each edge (P) of the tread region (15), characterised in that each shoulder region (2) is provided with shoulder grooves (6) and buttress hollows (10), said shoulder grooves (6) being arranged circumferentially of the tyre and extending radially inwardly from the tread edges (P) and terminating at a distance (L1) radially inwardly from the outer surface of the tread tread region (15) so that the radially inner ends thereof are located on a circle at the surface of each shoulder region (2), said buttress hollows (10) arranged circumferentially of the tyre so as to be positioned one between two circumferentially adjacent shoulder grooves (6), and the radially outermost ends of said buttress hollows (10) being located radially inwardly of said radially innermost ends of the shoulder grooves (6).

2. A pneumatic tyre according to claim 1, characterised in that the distance (L1) of the radially innermost ends of the shoulder grooves (B) from the outer surface of the tread region (15) is in the range of 0.5 to 4% of the outer diameter of the tyre.

3. A pneumatic tyre according to claim 1 or characterised the distance (L3) of the radially outermost end (10A) of each buttress hollow (10) from the radially innermost ends of the shoulder grooves (6) is in the range of 0.2 to 4% of the outer diameter of the tyre.

4. A Pneumatic tyre according to claim 1, 2 or 3 characterised in that the maximum depth and the length (L2) of said buttress hollows (10) are substantially 5mm and more than 0.8% of the outer diameter of the tyre respectively.

## Revendications

1. Pneumatique ayant une région (15) de bande de roulement et une paire de régions (2) d'épaulement disposées radialement vers l'intérieur, chacune à partir d'un bord (P) de la région (15) de la bande de roulement, caractérisé en ce que chaque région d'épaulement (2) a des gorges (6) d'épaulement et des cavités (10) de contrefort, les gorges (6) d'épaulement étant placées à la circonférence du pneumatique et étant disposées radialement vers l'intérieur depuis les bords (P) de la bande de roulement et se terminant à une distance (L1), en direction radiale vers l'intérieur et par rapport à la surface externe de la région (15) de la bande de roulement, telle que les extrémités radialement internes se trouvent sur un cercle formé à la surface de chaque région d'épaulement (2), les cavités (10) de contrefort étant placées à la circonférence du pneumatique de manière qu'elles se trouvent chacune entre deux gorges (6) d'épaulement adjacentes circonférentiellement, et les extrémités radialement externes des cavités (10) de contrefort sont placées radialement vers l'intérieur des extrémités radialement les plus internes des gorges (6) d'épaulement.

2. Pneumatique selon la revendication 1, caractérisé en ce que la distance (L1) des extrémités radialement les plus à l'intérieur des gorges (B) de la bande de roulement, par rapport à la surface externe de la région (15) de bande de roulement, est comprise entre 0,5 et 4 % du diamètre externe du pneumatique.

3. Pneumatique selon la revendication 1, caractérisé en ce que la distance (L3) de l'extrémité radialement la plus à l'extérieur (10A) de chaque cavité (10) de contrefort par rapport aux extrémités radialement les plus à l'intérieur des gorges (6) d'épaulement, est comprise entre 0,2 et 4 % du diamètre externe du pneumatique.

4. Pneumatique selon la revendication 1, 2 ou 3, caractérisé en ce que la profondeur maximale et la longueur (L2) des cavités (10) de contrefort sont pratiquement de 5 mm et de plus de 0,8 % respectivement du diamètre externe du pneumatique.

## Patentansprüche

1. Luftreifen mit einem Laufflächenbereich (15) und einem Paar von sich ausgehend von jeder Ecke (P) des Laufflächenbereiches (15) radial einwärts erstreckenden Schulterbereichen (2), dadurch **gekennzeichnet,** daß jeder Schulterbereich (2) mit Schulteraussparungen (6) und gegenstützenden Aushöhlungen (10) ausgestattet ist, wobei die Schulteraussparungen (6) in Umfangsrichtung des Reifens angeordnet sind und sich radial einwärts der Ränder (P) der Laufflächen erstrecken und in einem Abstand (L1) radial einwärts von der äußeren Oberfläche des Laufflächenbereiches (15) enden, so daß die radial inneren Enden auf einem Kreis an der Oberfläche jedes Schulterbereiches (2) gelegen sind, wobei die gegenstützenden Aushöhlungen (10) so auf dem Umfang des Reifens angeordnet sind, daß jeweils eine Aushöhlung zwischen zwei in Umfangsrichtung benachbarten Schulteraussparungen (6) positioniert ist, und die radial äußersten Enden der gegenstutzenden Aushöhlungen (10) radial innerhalb der radial innersten Enden der Schulteraussparungen (6) angeordnet sind.

2.  Luftreifen nach Anspruch 1,
    dadurch gekennzeichnet,
    daß der Abstand (L1) der radial innersten Enden der Schulteraussparungen (B) von der äußeren Oberfläche des Laufflächenbereiches (15) im Bereich von 0.5 bis 4 % des Außendurchmessers des Reifens liegt.

3.  Luftreifen nach Anspruch 1 oder 2,
    dadurch gekennzeichnet,
    daß der Abstand (L3) der radial äußersten Enden (10A) jeder gegenstützenden Aushöhlung (10) von den radial innersten Enden der Schulteraussparungen (6) im Bereich von 0.2 bis 4% des Außendurchmessers des Reifens liegt.

4.  Luftreifen nach Anspruch 1, 2 oder 3,
    gekennzeichnet dadurch,
    daß die Maximaltiefe und die Länge (L2) der gegenstützenden Aushöhlungen (10) jeweils im wesentlichen 5 mm und mehr als 0.8 % des Außendurchmessers des Reifens beträgt.

# FIG.1

# FIG.2

# FIG.3

FIG.5 (a)

FIG.4

FIG.5 (b)